# EUROPEAN PATENT APPLICATION

(11) **EP 4 489 182 A1**
(43) Date of publication of application: **08.01.2025**
(21) Application number: 23763706.1
(22) Date of filing: 02.03.2023
(51) Int. Cl.: H01M 10/44, H02J 7/00, H01M 10/54

(54) **BATTERY DISCHARGE APPARATUS AND DISCHARGING METHOD THEREOF**

(30) Priority: 02.03.2022 KR 20220026570; 02.03.2022 KR 20220026572
(71) Applicant: Maroo On Inc., Cheongju-si, Chungcheongbuk-do 28128 (KR)
(72) Inventor: HAN, Yeon Soo, Cheongju-si Chungcheongbuk-do 28293 (KR); SHIN, Eun Sung, Cheongju-si Chungcheongbuk-do 28292 (KR); MOON, Myeong Ji, Cheongju-si Chungcheongbuk-do 28109 (KR)
(74) Representative: Seyer & Nobbe Patentanwälte PartmbB
(86) International application number: PCT/KR2023/002871
(87) International publication number: WO 2023/167508

(57) **Abstract**

The present invention provides a battery discharge apparatus including: a discharge unit; a monitoring unit including a plurality of power detecting units connected to the discharge unit in parallel and connected to a plurality of batteries, respectively; a plurality of temperature sensors connected to the monitoring unit and sensing a temperature of the plurality of batteries; and a plurality of gas sensors connected to the monitoring unit and sensing a gas of the plurality of batteries..

## Description

### Cross Reference to Related Applications

This application is a continuation of International Application No. PCT/KR2023/002871, filed on March 2, 2023, which claims the benefit of priority from Korean Application No. 10-2022-0026570, filed on March 2, 2022, No. 10-2022-0026572, filed on March 2, 2022, No. 10-2023-0027661, filed on March 2, 2023 and No. 10-2023-0027663, filed on March 2, 2023, in the Korean Intellectual Property Office, the entire disclosures of each of which are incorporated herein by reference for all purposes.

### Field

The present invention relates to a battery discharge apparatus, and more particularly, to a battery discharge apparatus connected to a plurality of batteries in parallel or in series and a discharging method of the battery discharge apparatus.

### Discussion of the Related Art

Generally, vehicles using an internal combustion engine that uses gasoline or heavy oil as main fuel have a serious impact on air pollution and the like. Accordingly, recently, in order to reduce pollution, a great amount of effort has been made to develop electric vehicles or hybrid vehicles.

In particular, electric vehicles are vehicles that use a battery engine operated by electric energy output from a battery, and electric vehicles use, as a main power source, a battery in which a plurality of battery cells capable of charging and discharging are formed as a single pack, and thus there is an advantage that there is no exhaust gas and very little noise.

A battery, which is a secondary battery or a storage battery, is discharged using a discharge apparatus for testing, reuse, or recycling.

For example, when a performance test of a battery with a problem is performed or a battery in use is reused for another device, the detached battery is discharged to a discharge cutoff voltage and transported in a state of charge of 0%.

In addition, when the battery whose life is completed is disassembled and materials thereof are recycled, the detached battery is discharged to a voltage that is less than the discharge cutoff voltage and transported in the state in which a total voltage is 0 V.

In this way, in order to secure electrical safety, the detached battery is discharged using a discharge apparatus.

In particular, batteries for the recycling of materials thereof are discharged by being immersed in salt water, and such salt water immersion discharge has a problem of poor workability, increased discharge time, and increased discharge costs due to additional equipment.

The discharge apparatus according to the related art is connected to a single battery to perform a discharge operation.

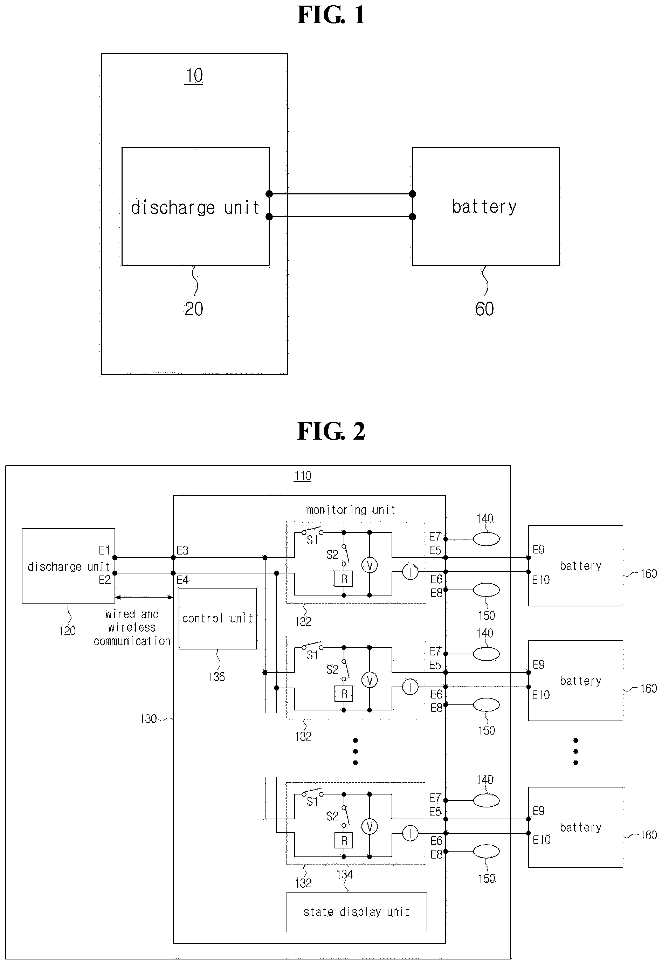

FIG. 1 is a view showing a discharge apparatus according to the related art.

In FIG. 1, a discharge apparatus 10 according to the related art includes a discharge unit 20. A discharge operation is performed in a state that a single battery 60 is connected to the discharge unit 20.

In the discharge apparatus 10 according to the related art, since the discharge operation is performed in a state that the discharge unit 20 and the battery 60 are connected to each other as 1:1 relationship, a discharge time and a discharge cost for the plurality of batteries 60 increase.

### Detailed Illustration of the Invention

### Technical Problem

The object of the present invention is to provide a battery discharge apparatus where a discharge time and a discharge cost are reduced by performing a discharge operation in a state that a discharge unit is connected to a plurality of batteries in parallel or in series and a discharge method of the battery discharge apparatus.

### Technical Solution

To obtain the above object, the present invention provides a battery discharge apparatus including: a discharge unit; a monitoring unit including a plurality of power detecting units connected to the discharge unit in parallel and connected to a plurality of batteries, respectively; a plurality of temperature sensors connected to the monitoring unit and sensing a temperature of the plurality of batteries; and a plurality of gas sensors connected to the monitoring unit and sensing a gas of the plurality of batteries.

In addition, first and second terminals of the discharge unit may be connected to third and fourth terminals, respectively, of the monitoring unit.

Further, each of the plurality of power detecting units may include: a first switch; a second switch connected to the first switch; a resistor connected to the second switch; a voltmeter connected to the second switch and the resistor; and an ammeter connected to the resistor.

In addition, in a discharge mode, the first switch of each of the plurality of power detecting units may be turned on and the second switch is turned off, and a charge of the plurality of batteries may be transferred to the discharge unit.

Further, in a detecting mode, the first switch of at least one of the plurality of power detecting units mat be turned off and the second switch mat be turned on, and the voltmeter and the ammeter may detect a voltage and a current, respectively, of at least one of the plurality of batteries corresponding to the at least one of the plurality of power detecting units.

In addition, a first electrode of the first switch may be connected to a third terminal of the monitoring unit, and a second electrode of the first switch may be connected to a first electrode of the second switch, a first electrode of the voltmeter and a fifth terminal of the monitoring unit, the first electrode of the second switch may be connected to the second electrode of the first switch, the first electrode of the voltmeter and the fifth terminal of the monitoring unit, and a second electrode of the second switch may be connected to a first electrode of the resistor, the first electrode of the resistor may be connected to the second electrode of the second switch S2, and a second electrode of the resistor may be connected to a fourth terminal of the monitoring unit, a second electrode of the voltmeter and a first electrode of the ammeter, the first electrode of the voltmeter may be connected to the second electrode of the first switch, the first electrode of the second switch and the fifth terminal of the monitoring unit, and the second electrode of the voltmeter may be connected to the fourth terminal of the monitoring unit, and the first electrode of the ammeter may be connected to the fourth terminal of the monitoring unit, the second electrode of the resistor and the second electrode of the voltmeter, and a second electrode of the ammeter may be connected to a sixth terminal of the monitoring unit.

Further, fifth and sixth terminals of the monitoring unit may be connected to ninth and tenth terminals, respectively, of each of the plurality of batteries.

In addition, a seventh terminal of the monitoring unit may be connected to the plurality of temperature sensors, and an eighth terminal of the monitoring unit may be connected to the plurality of gas sensors.

Further, the battery discharge apparatus may further include a state display unit displaying a discharge information of the discharge unit, a power information of the plurality of power detecting units, a temperature information of the plurality of temperature sensors and a gas information of the plurality of gas sensors as a state information; and a control unit communicating with the discharge unit wiredly and wirelessly and controlling the plurality of power detecting units and the state display unit.

In another aspect, the present invention provides a battery discharge apparatus including: a discharge unit; a monitoring unit including a plurality of power detecting units connected to the discharge unit in series and connected to a plurality of batteries, respectively; a plurality of temperature sensors connected to the monitoring unit and sensing a temperature of the plurality of batteries; and a plurality of gas sensors connected to the monitoring unit and sensing a gas of the plurality of batteries.

In addition, first and second terminals of the discharge unit may be connected to third and fourth terminals, respectively, of the monitoring unit.

Further, each of the plurality of power detecting units may include: a first switch; a second switch connected to the first switch; a resistor connected to the second switch; a voltmeter connected to the second switch and the resistor; an ammeter connected to the resistor; a third switch connected to the resistor; and a fourth switch connected to the first and third switches.

In addition, in a discharge mode, the first and third switches of each of the plurality of power detecting units may be turned on and the second and fourth switches may be turned off, and a charge of the plurality of batteries may be transferred to the discharge unit.

Further, in a detecting mode, the first and third switches of at least one of the plurality of power detecting units may be turned off and the second and fourth switches may be turned on, and the voltmeter and the ammeter may detect a voltage and a current, respectively, of at least one of the plurality of batteries corresponding to the at least one of the plurality of power detecting units.

In addition, the plurality of power detecting units may include first to nth stages connected to the discharge unit in series, a first electrode of the first switch of the first stage may be connected to a third terminal of the monitoring unit and a first electrode of the fourth switch of the first stage, a first electrode of each of the first switch of the second to nth stages may be connected to a second electrode of the third switch of a previous stage, a second electrode of the fourth switch and a first electrode of the fourth switch of a present stage, and a second electrode of the first switch of each of the first to nth stages may be connected to a first electrode of the second switch of a present stage, a first electrode of the voltmeter of a present stage and a fifth terminal of the monitoring unit, the first electrode of the second switch of each of the first to nth stages may be connected to the second electrode of the first switch of a present stage, the first electrode of the voltmeter of a present stage and the fifth terminal of the monitoring unit, and a second electrode of the second switch of each of the first to nth stages may be connected to a first electrode of the resistor, a first electrode of the third switch of each of the first to nth stages may be connected to a second electrode of the resistor of a present stage, a second electrode of the voltmeter of a present stage and a first electrode of the ammeter of a present stage, a second electrode of the third switch of each of the first to (n-1)th stages may be connected to a second electrode of the fourth switch of a present stage, the first electrode of the first switch of a next stage and a first electrode of the fourth switch of a next stage, and a second electrode of the third switch of the nth stage may be connected to a fourth terminal of the monitoring unit and a second electrode of the fourth switch of a present stage, a first electrode of the fourth switch of the first stage may be connected to a third terminal of the monitoring unit and the first electrode of the first switch of the first stage, a first electrode of the fourth switch of each of the second to nth stages may be connected to the second electrode of the third switch of a previous stage and a second electrode of the fourth switch of a previous stage, a second electrode of the fourth switch of each of the first to (n-1)th stages may be connected to the second electrode of the third switch of a present stage, the first electrode of the first switch of a next stage and a first electrode of the fourth switch of a next stage, and a second electrode of the fourth switch of the nth stage may be connected to the second electrode of the third switch of a present stage and the fourth terminal of the monitoring unit, the first electrode of the resistor of each of the first to nth stages may be connected to the second electrode of the second switch S2 of a present stage, and a second electrode of the resistor of each of the first to nth stages may be connected to the first electrode of the third switch of a present stage, a second electrode of the voltmeter and the first electrode of the ammeter, the first electrode of the voltmeter of each of the first to nth stages may be connected to the second electrode of the first switch of a present stage, the first electrode of the second switch of a present stage and the fifth terminal of the monitoring unit, and the second electrode of the voltmeter of each of the first to nth stages may be connected to the first electrode of the third switch of a present stage, the second electrode of the resistor of a present stage and the first electrode of the ammeter of a present stage, and the first electrode of the ammeter of each of the first to nth stages may be connected to the first electrode of the third switch of a present stage, the second electrode of the resistor of a present stage and the second electrode of the voltmeter of a present stage, and a second electrode of the ammeter of each of the first to nth stages may be connected to a sixth terminal of the monitoring unit.

Further, fifth and sixth terminals of the monitoring unit may be connected to ninth and tenth terminals, respectively, of each of the plurality of batteries.

In addition, a seventh terminal of the monitoring unit may be connected to the plurality of temperature sensors, and an eighth terminal of the monitoring unit may be connected to the plurality of gas sensors.

Further, the battery discharge apparatus may further include: a state display unit displaying a discharge information of the discharge unit, a power information of the plurality of power detecting units, a temperature information of the plurality of temperature sensors and a gas information of the plurality of gas sensors as a state information; and a control unit communicating with the discharge unit wiredly and wirelessly and controlling the plurality of power detecting units and the state display unit.

In addition, the battery discharge apparatus may further include a power unit connected to the monitoring unit, and the monitoring unit may further include: a fifth switch connected between the discharge unit and the plurality of power detecting units; a sixth switch connected between the plurality of power detecting units and the power unit; and a seventh switch connected between the discharge unit and the power unit.

Further, in an additional discharge mode, the first and third switches of each of the plurality of power detecting units, the sixth switch and the seventh switch may be turned on and the second and fourth switches of each of the plurality of power detecting units and the fifth switch may be turned off, and a reverse potential voltage of the power unit may be applied to the plurality of batteries.

In addition, the plurality of power detecting units may include first to nth stages connected to the discharge unit in series, a first electrode of the fifth switch may be connected to a second electrode of the third switch of the nth stage, a second electrode of the fourth switch of the nth stage and a first electrode of the sixth switch, and a second electrode of the fifth switch may be connected to a fourth terminal of the monitoring unit and a first electrode of the seventh switch, a first electrode of the sixth switch may be connected to the second electrode of the third switch of the nth stage, the second electrode of the fourth switch of the nth stage and the first electrode of the fifth switch, and a second electrode of the sixth switch may be connected an eleventh terminal of the monitoring unit, and a first electrode of the seventh switch may be connected to the fourth terminal of the monitoring unit and the second electrode of the fifth switch, and a second electrode of the seventh switch may be connected to a twelfth terminal of the monitoring unit.

In another aspect, the present invention provides a battery discharge apparatus including: a plurality of discharge units; a plurality of monitoring units including a power detecting unit connected to each of the plurality of discharge units and connected to a plurality of batteries, respectively; a plurality of temperature sensors connected to the plurality of monitoring units, respectively, and sensing a temperature of the plurality of batteries; a plurality of gas sensors connected to the plurality of monitoring units, respectively, and sensing a gas of the plurality of batteries; a main control unit transmitting and receiving an information with the plurality of discharge units and the plurality of monitoring units; and a plurality of power units connected to the plurality of monitoring units, respectively, and supplying a reverse potential voltage to the plurality of batteries, respectively.

In addition, the power detecting unit may include: a first switch; a second switch connected to the first switch; a resistor connected to the second switch; a voltmeter connected to the second switch and the resistor; and an ammeter connected to the resistor.

Further, each of the plurality of monitoring units may further include: a third switch connected between each of the plurality of discharge units and the power detecting unit; a fourth switch connected between the power detecting unit and each of the plurality of power units; and a seventh switch connected between each of the plurality of discharge units and each of the plurality of power units.

### Advantageous Effects

The present invention has an effect such that a discharge time and a discharge cost are reduced by performing a discharge operation in a state that a discharge unit is connected to a plurality of batteries in parallel or in series.

### Brief Description of the Drawings

FIG. 1 is a view showing a discharge apparatus according to the related art;
FIG. 2 is a view showing a battery discharge apparatus according to an embodiment of the present disclosure;
FIG. 3A and 3B are views showing operation states of a discharge mode and a detecting mode, respectively, of a battery discharge apparatus according to a first embodiment of the present disclosure;
FIG. 4 is a view showing a battery discharge apparatus according to a second embodiment of the present disclosure;
FIG. 5A and 5B are views showing operation states of a discharge mode and a detecting mode, respectively, of a battery discharge apparatus according to a second embodiment of the present disclosure;
FIG. 6 is a view showing a battery discharge apparatus according to a third embodiment of the present disclosure;
FIG. 7A, 7B and 7C are views showing operation states of a discharge mode, a detecting mode and an additional discharge mode, respectively, of a battery discharge apparatus according to a third embodiment of the present disclosure;
FIG. 8 is a view showing a battery discharge apparatus according to a fourth embodiment of the present disclosure;
FIG. 9A, 9B and 9C are views showing operation states of a discharge mode, a detecting mode and an additional discharge mode, respectively, of a battery discharge apparatus according to a fourth embodiment of the present disclosure;

### Detailed Description of the Embodiments

FIG. 2 is a view showing a battery discharge apparatus according to an embodiment of the present disclosure.

In FIG. 2, a battery discharge apparatus 110 according to a first embodiment of the present disclosure includes a discharge unit 120, a monitoring unit 130, a plurality of temperature sensors 140 and a plurality of gas sensors 150.

The discharge unit 120 is connected to a plurality of batteries 160 through the monitoring unit 130 to perform a discharge operation for the plurality of batteries 160.

The discharge unit 120 may include a plurality of road resistors (not shown) and a plurality of switches (not shown) connected between first and second terminals E1 and E2 in series or in parallel. The plurality of road resistors of the discharge unit 120 may remove charges remaining in the plurality of batteries 160 by converting the remaining charges into a heat.

The monitoring unit 130 is connected between the discharge unit 120 and the plurality of batteries 160 to transfer the remaining charges in the plurality of batteries 160 to the discharge unit 120 or to monitor (observe and manage) a state of the discharge unit 120 and the plurality of batteries 160.

For example, third and fourth terminals E3 and E4 of the monitoring unit 130 may be connected to the first and second terminals E1 and E2, respectively, of the discharge unit 120. Fifth and sixth terminals E5 and E6 of the monitoring unit 130 may be connected to ninth and tenth terminals E9 and E10, respectively, of each of the plurality of batteries 160. Seventh and eighth terminals E7 and E8 of the monitoring unit 130 may be connected to the temperature sensor 140 and the gas sensor 150, respectively.

The first, third, fifth and ninth terminals E1, E3, E5 and E9 may correspond to an anode (+), and the second, fourth, sixth and tenth terminals E2, E4, E6 and E10 may correspond to a cathode (-).

The monitoring unit 130 may include a plurality of power detecting units 132, a state display unit 134 and a control unit 136.

Each of the plurality of power detecting units 132 is connected to the discharge unit 120 to transfer the remaining charges in the plurality of batteries 160 to the discharge unit 120 or detects a power information such as a voltage and a current of the plurality of batteries 160 to transfer the power information of the plurality of batteries 160 to the state display unit 134.

Each of the plurality of power detecting units 132 may include first and second switches S1 and S2, a resistor R, a voltmeter V and an ammeter I, and the plurality of power detecting units 132 may be connected to the discharge unit 120 in parallel.

The first switch S1 may be connected between the discharge unit 120 and the battery 160, and the second switch S2 may be connected between the first switch S1 and the resistor R. The resistor R may be connected between the second switch S2 and the battery 160, the voltmeter V may be connected to the second switch S2 and the resistor R, and the ammeter I may be connected between the resistor R and the battery 160.

A first electrode of the first switch S1 may be connected to the third terminal E3 of the monitoring unit 130, and a second electrode of the first switch S1 may be connected to a first electrode of the second switch S2, a first electrode of the voltmeter V and the fifth terminal E5 of the monitoring unit 130.

A first electrode of the second switch S2 may be connected to the second electrode of the first switch S1, the first electrode of the voltmeter V and the fifth terminal E5 of the monitoring unit 130, and a second electrode of the second switch S2 may be connected to a first electrode of the resistor R.

A first electrode of the resistor R may be connected to the second electrode of the second switch S2, and a second electrode of the resistor R may be connected to the fourth terminal E4 of the monitoring unit 130, a second electrode of the voltmeter V and a first electrode of the ammeter I.

A first electrode of the voltmeter V may be connected to the second electrode of the first switch S1, the first electrode of the second switch S2 and the fifth terminal E5 of the monitoring unit 130, and a second electrode of the voltmeter V may be connected to the fourth terminal E4 of the monitoring unit 130, the second electrode of the resistor R and the first electrode of the ammeter I.

A first electrode of the ammeter I may be connected to the fourth terminal E4 of the monitoring unit 130, the second electrode of the resistor R and the second electrode of the voltmeter V, and a second electrode of the ammeter I may be connected to the sixth terminal E6 of the monitoring unit 130.

The state display unit 134 receives a discharge information from the discharge unit 120, receives the power information of the plurality of batteries 160 from the plurality of power detecting units 132 and receives a temperature information and a gas information of the plurality of batteries 160 from the plurality of temperature sensors 140 and the plurality of gas sensors 150. The state display unit 134 displays the discharge information as a state information of the discharge unit 120 and displays the power information, the temperature information and the gas information as a state information of each of the plurality of batteries 160.

For example, the state display unit 134 may include a flat panel display such as a liquid crystal display device and an organic light emitting diode display device.

Although one state display unit 134 displays the state information of the plurality of batteries 160 in an embodiment of FIG. 2, a plurality of state display units may display the state information of the plurality of batteries 160, respectively, in another embodiment.

The control unit 136 transmits and receives an information with the discharge unit 120 through a wired and wireless communication and controls the plurality of power detecting unit 132 and the state display unit 134.

For example, the discharge unit 120 may transmit the discharge information such as a performance of the discharge operation and a completion of the discharge operation to the control unit 136 of the monitoring unit 130, and the control unit 136 of the monitoring unit 130 may transmit an order information such as a start of the discharge operation and a pause of the discharge operation to the discharge unit 120. Each of the plurality of temperature sensors 140 and the plurality of gas sensors 150 may be connected to the monitoring unit 130 and may be disposed adjacent to the plurality of batteries 160 to sense the temperature information and the gas information of the plurality of batteries 160 and to transmit the temperature information and the gas information of the plurality of batteries 160 to the state display unit 134.

For example, the plurality of temperature sensors 140 may be connected to the seventh terminal E7 of the monitoring unit 130, and the plurality of gas sensors 150 may be connected to the eighth terminal E8 of the monitoring unit 130.

An electrolyte in the plurality of batteries 160 is sensitive to a heat. As a result, when a relatively high current flows the plurality of batteries 160 or the plurality of batteries 160 are exposed to a relatively high temperature, a chemical reaction may occur according to a movement of an electron to generate a heat or a gas, and a swelling phenomenon where the plurality of batteries 160 swell up may occur to cause an ignition or an explosion.

Accordingly, the monitoring unit 130 may manage an abnormality of the plurality of batteries 160 using the temperature information and the gas information of the plurality of batteries 160.

The plurality of batteries 160 may be connected to the discharge unit 120 through the monitoring unit 130 in parallel. For example, the ninth and tenth terminals E9 and E10 of each of the plurality of batteries 150 may be connected to the fifth and sixth terminals E5 and E6, respectively, of the monitoring unit 130.

The ninth terminal E9 of each of the plurality of batteries 160 may be connected to the second electrode of the first switch S1, the first electrode of the second switch S2 and the first electrode of the voltmeter V of each of the plurality of power detecting units 132 through the fifth terminal E5 of the monitoring unit 130, and the tenth terminal E10 of each of the plurality of batteries 160 may be connected to the second electrode of the ammeter I of each of the plurality of power detecting units 132 through the sixth terminal E6 of the monitoring unit 130.

The monitoring unit 130 may operate in a discharge mode and a detecting mode according to the control of the control unit 136.

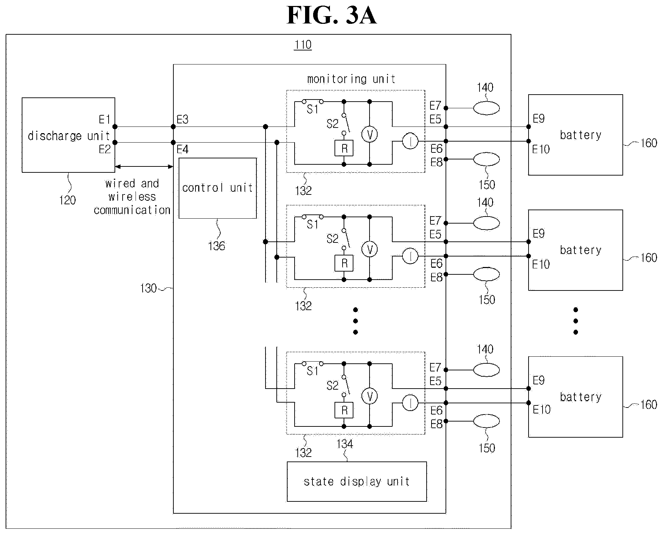

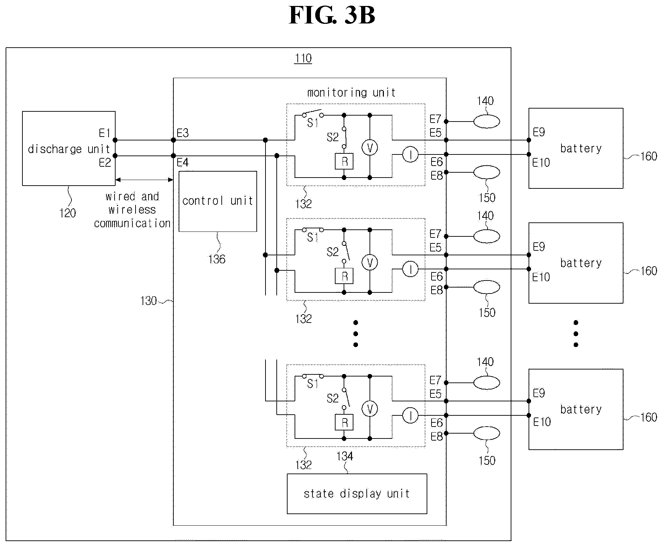

FIG. 3A and 3B are views showing operation states of a discharge mode and a detecting mode, respectively, of a battery discharge apparatus according to a first embodiment of the present disclosure.

In a discharge mode of FIG. 3A, the first and second switches S1 and S2 of each of the plurality of power detecting units 132 are turned on and off, respectively, according to a control of the control unit 136, and the ninth and tenth terminals E9 and E10 of each of the plurality of batteries 160 are connected to the first and second terminals E1 and E2, respectively, of the discharge unit 120.

As a result, the remaining charges in each of the plurality of batteries 160 may be transferred to the discharge unit 120 through the monitoring unit 130, and each of the plurality of batteries 160 connected to the discharge unit 120 in parallel may be discharged.

In a detecting mode of FIG. 3B, the first and second switches S1 and S2 of at least one of the plurality of power detecting units 132 are turned off and on, respectively, according to a control of the control unit 136, and a closed circuit is formed among the ninth and tenth terminals E9 and E10 of at least corresponding one of the plurality of batteries 160 and the resistor R of the at last one of the plurality of power detecting units 132.

As a result, the voltmeter V and the ammeter I of the at least one of the plurality of power detecting units 132 may detect the power information such as the voltage and the current of the at least corresponding one of the plurality of batteries 160.

The first and second switches S1 and S2 of the others of the plurality of power detecting units 132 are turned on and off, respectively, to discharge the others of the plurality of batteries 160, or the first and second switches S1 and S2 of the others of the plurality of power detecting units 132 are turned off and on, respectively, to detect the power information of the others of the plurality of batteries 160.

In the battery discharge apparatus 110 according to a first embodiment of the present disclosure, since the discharge unit 120 and the plurality of batteries 160 are connected to each other in parallel as 1:N relationship to perform the discharge operation, a time and a cost of the discharge operation for the plurality of batteries 160 are reduced.

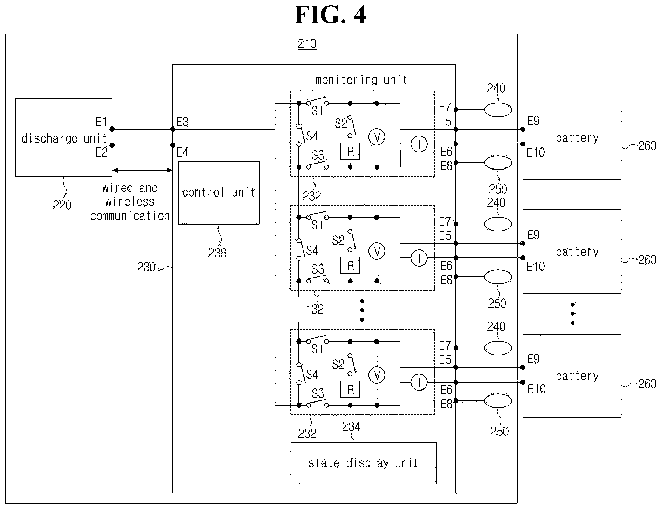

FIG. 4 is a view showing a battery discharge apparatus according to a second embodiment of the present disclosure.

In FIG. 4, a battery discharge apparatus 210 according to a second embodiment of the present disclosure includes a discharge unit 220, a monitoring unit 230, a plurality of temperature sensors 240 and a plurality of gas sensors 250.

The discharge unit 220 is connected to a plurality of batteries 260 through the monitoring unit 230 to perform a discharge operation for the plurality of batteries 260.

The discharge unit 220 may include a plurality of road resistors (not shown) and a plurality of switches (not shown) connected between first and second terminals E1 and E2 in series or in parallel. The plurality of road resistors of the discharge unit 220 may remove charges remaining in the plurality of batteries 260 by converting the remaining charges into a heat.

The monitoring unit 230 is connected between the discharge unit 220 and the plurality of batteries 260 to transfer the remaining charges in the plurality of batteries 260 to the discharge unit 120 or to monitor (observe and manage) a state of the discharge unit 220 and the plurality of batteries 260.

For example, third and fourth terminals E3 and E4 of the monitoring unit 230 may be connected to the first and second terminals E1 and E2, respectively, of the discharge unit 220. Fifth and sixth terminals E5 and E6 of the monitoring unit 230 may be connected to ninth and tenth terminals E9 and E10, respectively, of each of the plurality of batteries 260. Seventh and eighth terminals E7 and E8 of the monitoring unit 230 may be connected to the temperature sensor 240 and the gas sensor 250, respectively.

The first, third, fifth and ninth terminals E1, E3, E5 and E9 may correspond to an anode (+), and the second, fourth, sixth and tenth terminals E2, E4, E6 and E10 may correspond to a cathode (-).

The monitoring unit 230 may include a plurality of power detecting units 232, a state display unit 234 and a control unit 236.

Each of the plurality of power detecting units 232 is connected to the discharge unit 220 to transfer the remaining charges in the plurality of batteries 260 to the discharge unit 220 or detects a power information such as a voltage and a current of the plurality of batteries 260 to transfer the power information of the plurality of batteries 260 to the state display unit 234.

Each of the plurality of power detecting units 232 may include first to fourth switches S1 to S4, a resistor R, a voltmeter V and an ammeter I, and the plurality of power detecting units 232 may be constituted as a plurality of stages connected to the discharge unit 220 in series.

The first switch S1 of the first stage may be connected between the discharge unit 220 and the battery 260, and the first switch S1 of the second stage to the last stage may be connected between the third and fourth switches S3 and S4 of the previous stage and the battery 260. The second switch S2 may be connected between the first switch S1 and the resistor R. The third switch S3 of the first stage to the previous stage to the last stage may be connected between the resistor R and the first switch S1 of the next stage, and the third switch S3 of the last stage may be connected between the discharge unit 220 and the resistor R. The fourth switch S4 may be connected between the first and third switches S1 and S3.

The resistor R may be connected between the second switch S2 and the battery 260, the voltmeter V may be connected between the second switch S2 and the resistor R, and the ammeter I may be connected between the resistor R and the battery 260.

A first electrode of the first switch S1 of the first stage may be connected to the third terminal E3 of the monitoring unit 230 and a first electrode of the fourth switch S4, and a first electrode of the first switch S1 of the second stage to the last stage may be connected to a second electrode of the third switch S3 and a second electrode of the fourth switch S4 of the previous stage and a first electrode of the fourth switch S4 of the present stage. A second electrode of the first switch S1 may be connected to a first electrode of the second switch S2, a first electrode of the voltmeter V and the fifth terminal E5 of the monitoring unit 230.

A first electrode of the second switch S2 may be connected to the second electrode of the first switch S1, the first electrode of the voltmeter V and the fifth terminal E5 of the monitoring unit 230, and a second electrode of the second switch S2 may be connected to a first electrode of the resistor R.

A first electrode of the third switch S3 may be connected to a second electrode of the resistor R, a second electrode of the voltmeter V and a first electrode of the ammeter I. A second electrode of the third switch S3 of the first stage to the previous stage to the last stage may be connected to a second electrode of the fourth switch S4 of the present stage, the first electrode of the first switch S1 of the next stage and a first electrode of the fourth switch S4 of the next stage, and a second electrode of the third switch S3 of the last stage may be connected to the fourth terminal E4 of the monitoring unit 230 and a second electrode of the fourth switch S4 of the present stage.

A first electrode of the fourth switch S4 of the first stage may be connected to the third terminal E3 of the monitoring unit 230 and the first electrode of the first switch S1 of the present stage, and a first electrode of the fourth switch S4 of the second stage to the last stage may be connected to the second electrode of the third switch S3 of the previous stage and a second electrode of the fourth switch S4 of the previous stage. A second electrode of the fourth switch S4 of the first stage to the previous stage to the last stage may be connected to the second electrode of the third switch S3 of the present stage, the first electrode of the first switch S1 of the next stage and a first electrode of the fourth switch S4 of the next stage, and a second electrode of the fourth switch S4 of the last stage may be connected to the second electrode of the third switch S3 of the present stage and the fourth terminal E4 of the monitoring unit 230.

A first electrode of the resistor R may be connected to the second electrode of the second switch S2, and a second electrode of the resistor R may be connected to the first electrode of the third switch S3, a second electrode of the voltmeter V and a first electrode of the ammeter I.

A first electrode of the voltmeter V may be connected to the second electrode of the first switch S1, the first electrode of the second switch S2 and the fifth terminal E5 of the monitoring unit 230, and a second electrode of the voltmeter V may be connected to the first electrode of the third switch S3, the second electrode of the resistor R and the first electrode of the ammeter I.

A first electrode of the ammeter I may be connected to the first electrode of the third switch S3, the second electrode of the resistor R and the second electrode of the voltmeter V, and a second electrode of the ammeter I may be connected to the sixth terminal E6 of the monitoring unit 230.

The state display unit 234 receives a discharge information from the discharge unit 220, receives the power information of the plurality of batteries 260 from the plurality of power detecting units 232 and receives a temperature information and a gas information of the plurality of batteries 260 from the plurality of temperature sensors 240 and the plurality of gas sensors 250. The state display unit 234 displays the discharge information as a state information of the discharge unit 220 and displays the power information, the temperature information and the gas information as a state information of each of the plurality of batteries 260.

For example, the state display unit 234 may include a flat panel display such as a liquid crystal display device and an organic light emitting diode display device.

Although one state display unit 234 displays the state information of the plurality of batteries 260 in an embodiment of FIG. 4, a plurality of state display units may display the state information of the plurality of batteries 260, respectively, in another embodiment.

The control unit 236 transmits and receives an information with the discharge unit 220 through a wired and wireless communication and controls the plurality of power detecting unit 232 and the state display unit 234.

For example, the discharge unit 220 may transmit the discharge information such as a performance of the discharge operation and a completion of the discharge operation to the control unit 236 of the monitoring unit 230, and the control unit 236 of the monitoring unit 230 may transmit an order information such as a start of the discharge operation and a pause of the discharge operation to the discharge unit 220.

Each of the plurality of temperature sensors 240 and the plurality of gas sensors 250 may be connected to the monitoring unit 230 and may be disposed adjacent to the plurality of batteries 260 to sense the temperature information and the gas information of the plurality of batteries 260 and to transmit the temperature information and the gas information of the plurality of batteries 260 to the state display unit 234.

For example, the plurality of temperature sensors 240 may be connected to the seventh terminal E7 of the monitoring unit 230, and the plurality of gas sensors 250 may be connected to the eighth terminal E8 of the monitoring unit 230.

An electrolyte in the plurality of batteries 260 is sensitive to a heat. As a result, when a relatively high current flows the plurality of batteries 260 or the plurality of batteries 260 are exposed to a relatively high temperature, a chemical reaction may occur according to a movement of an electron to generate a heat or a gas, and a swelling phenomenon where the plurality of batteries 260 swell up may occur to cause an ignition or an explosion.

Accordingly, the monitoring unit 230 may manage an abnormality of the plurality of batteries 260 using the temperature information and the gas information of the plurality of batteries 260.

The plurality of batteries 260 may be connected to the discharge unit 220 through the monitoring unit 230 in series.

For example, the ninth and tenth terminals E9 and E10 of each of the plurality of batteries 260 may be connected to the fifth and sixth terminals E5 and E6, respectively, of the monitoring unit 230.

The ninth terminal E9 of each of the plurality of batteries 260 may be connected to the second electrode of the first switch S1, the first electrode of the second switch S2 and the first electrode of the voltmeter V of each of the plurality of power detecting units 232 through the fifth terminal E5 of the monitoring unit 230, and the tenth terminal E10 of each of the plurality of batteries 260 may be connected to the second electrode of the ammeter I of each of the plurality of power detecting units 232 through the sixth terminal E6 of the monitoring unit 230.

The monitoring unit 230 may operate in a discharge mode and a detecting mode according to the control of the control unit 236.

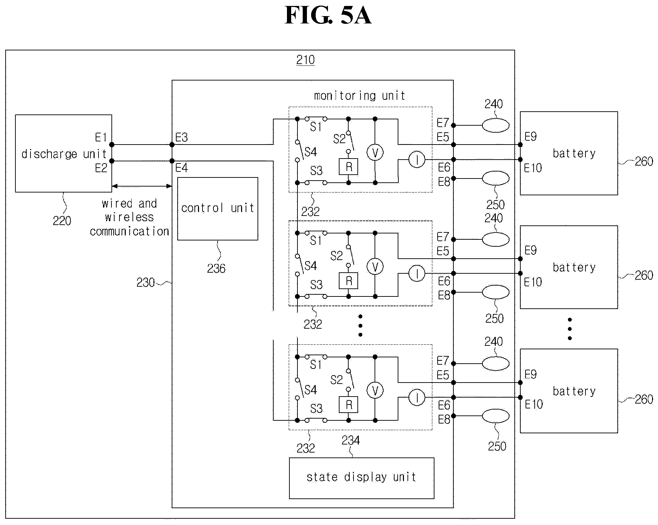

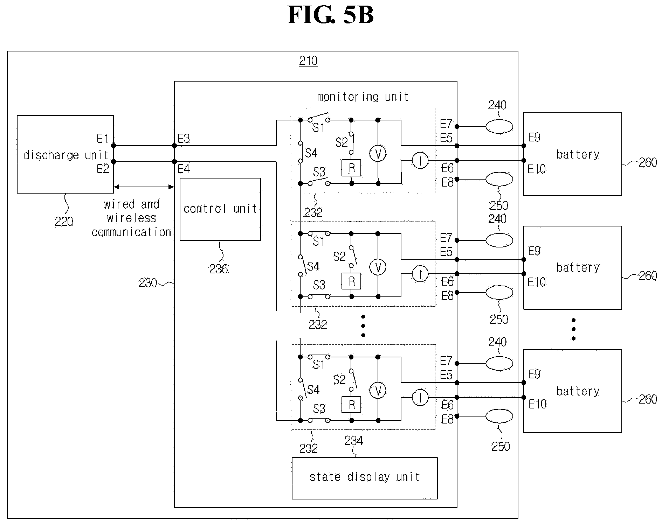

FIG. 5A and 5B are views showing operation states of a discharge mode and a detecting mode, respectively, of a battery discharge apparatus according to a second embodiment of the present disclosure.

In a discharge mode of FIG. 5A, the first and third switches S1 and S3 of each of the plurality of power detecting units 232 are turned on and the second and fourth switches S2 and S4 of each of the plurality of power detecting units 232 are turned off according to a control of the control unit 236. The ninth terminals E9 of the battery 260 connected to the first stage is connected to the first terminal E1 of the discharge unit 220, and the ninth terminal E9 of each of the plurality of batteries 260 connected to the second stage to the last stage is connected to the tenth terminal E10 of the battery 260 connected to the previous stage. The tenth terminal E10 of each of the plurality of batteries 260 connected to the first stage to the previous stage to the last stage is connected to the ninth terminal E9 of the battery 260 connected to the next stage, and the tenth terminal E10 of the battery 260 connected to the last stage is connected to the second terminal E2 of the discharge unit 220.

As a result, the first terminal E1 of the discharge unit 220 is connected to the ninth terminal E9 of the battery 260 connected to the first stage, and the second terminal E2 of the discharge unit 220 is connected to the tenth terminal E10 of the battery 260 connected to the last stage. The plurality of batteries 260 are connected to each other in series. The remaining charges in each of the plurality of batteries 260 may be transferred to the discharge unit 220 through the monitoring unit 230, and each of the plurality of batteries 260 connected to the discharge unit 220 in series may be discharged.

In a detecting mode of FIG. 5B, the first and third switches S1 and S3 of at least one of the plurality of power detecting units 232 are turned off and the second and fourth switches S2 and S4 of the at least one of the plurality of power detecting units 232 are turned on according to a control of the control unit 236. A closed circuit is formed among the ninth and tenth terminals E9 and E10 of at least corresponding one of the plurality of batteries 260 and the resistor R of the at last one of the plurality of power detecting units 232.

As a result, the voltmeter V and the ammeter I of the at least one of the plurality of power detecting units 232 may detect the power information such as the voltage and the current of the at least corresponding one of the plurality of batteries 260.

The first and third switches S1 and S3 of the others of the plurality of power detecting units 232 are turned on and the second and fourth switches S2 and S4 of the others of the plurality of power detecting units 232 are turned off to discharge the others of the plurality of batteries 260 by connecting the others of the plurality of batteries 260 to the discharge unit 220 in series. Alternatively, the first and third switches S1 and S3 of the others of the plurality of power detecting units 232 are turned off and the second and fourth switches S2 and S4 of the others of the plurality of power detecting units 232 are turned on to detect the power information of the others of the plurality of batteries 260.

In the battery discharge apparatus 210 according to a second embodiment of the present disclosure, since the discharge unit 220 and the plurality of batteries 260 are connected to each other in series as 1:N relationship to perform the discharge operation, a time and a cost for the discharge operation of the plurality of batteries 260 are reduced.

In another embodiment, an extreme over-discharge for a permanent disutilization may be performed to a plurality of batteries using a power unit.

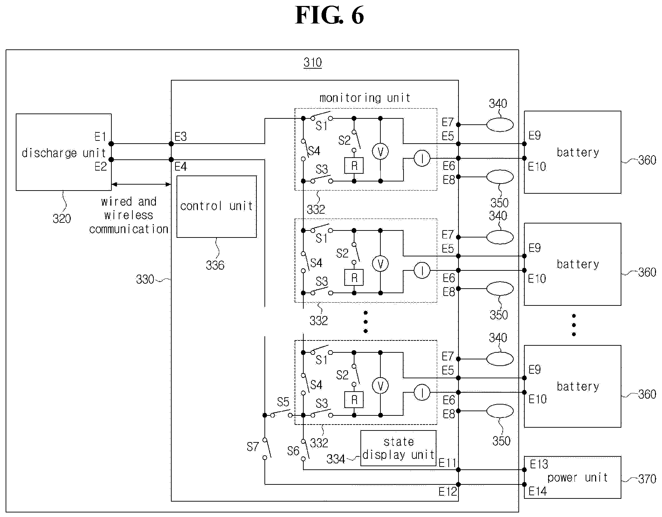

FIG. 6 is a view showing a battery discharge apparatus according to a third embodiment of the present disclosure. Illustration on a part the same as that of the first and second embodiments will be omitted.

In FIG. 6, a battery discharge apparatus 310 according to a third embodiment of the present disclosure includes a discharge unit 320, a monitoring unit 330, a plurality of temperature sensors 340, a plurality of gas sensors 350 and a power unit (power source) 370.

The discharge unit 320 is connected to a plurality of batteries 360 through the monitoring unit 330 to perform a discharge operation for the plurality of batteries 360.

The discharge unit 320 may include a plurality of road resistors (not shown) and a plurality of switches (not shown) connected between first and second terminals E1 and E2 in series or in parallel. The plurality of road resistors of the discharge unit 320 may remove charges remaining in the plurality of batteries 360 by converting the remaining charges into a heat.

For example, the discharge unit 320 may perform a discharge operation for the plurality of batteries 360 from a discharge start voltage to a discharge finish voltage through a discharge cutoff voltage.

The discharge cutoff voltage corresponds to a state of charge of about 0% defined for preventing an over-discharge. The discharge cutoff voltage is lower than the discharge start voltage and higher the discharge finish voltage. The charge maximum voltage, the discharge start voltage, the discharge cutoff voltage and the discharge finish voltage may be about 8V, about 5V, about 2.5V and about 1V, respectively.

The monitoring unit 330 is connected between the discharge unit 320 and the plurality of batteries 360 to transfer the remaining charges in the plurality of batteries 360 to the discharge unit 320 or to monitor (observe and manage) a state of the discharge unit 320 and the plurality of batteries 360.

For example, third and fourth terminals E3 and E4 of the monitoring unit 330 may be connected to the first and second terminals E1 and E2, respectively, of the discharge unit 320. Fifth and sixth terminals E5 and E6 of the monitoring unit 330 may be connected to ninth and tenth terminals E9 and E10, respectively, of each of the plurality of batteries 360. Seventh and eighth terminals E7 and E8 of the monitoring unit 330 may be connected to the temperature sensor 340 and the gas sensor 350, respectively.

The first, third, fifth and ninth terminals E1, E3, E5 and E9 may correspond to an anode (+), and the second, fourth, sixth and tenth terminals E2, E4, E6 and E10 may correspond to a cathode (-).

The monitoring unit 330 may include a plurality of power detecting units 332, fifth to seventh switches S5 to S7, a state display unit 334 and a control unit 336.

Each of the plurality of power detecting units 332 is connected to the discharge unit 320 to transfer the remaining charges in the plurality of batteries 360 to the discharge unit 320 or detects a power information such as a voltage and a current of the plurality of batteries 360 to transfer the power information of the plurality of batteries 360 to the state display unit 334.

Each of the plurality of power detecting units 332 may include first to fourth switches S1 to S4, a resistor R, a voltmeter V and an ammeter I, and the plurality of power detecting units 332 may be constituted as a plurality of stages connected to the discharge unit 320 in series.

The first switch S1 of the first stage may be connected between the discharge unit 320 and the battery 360, and the first switch S1 of the second stage to the last stage may be connected between the third and fourth switches S3 and S4 of the previous stage and the battery 360. The second switch S2 may be connected between the first switch S1 and the resistor R. The third switch S3 of the first stage to the previous stage to the last stage may be connected between the resistor R and the first switch S1 of the next stage, and the third switch S3 of the last stage may be connected between the discharge unit 320 and the resistor R. The fourth switch S4 may be connected between the first and third switches S1 and S3.

The resistor R may be connected between the second switch S2 and the battery 360, the voltmeter V may be connected between the second switch S2 and the resistor R, and the ammeter I may be connected between the resistor R and the battery 360.

A first electrode of the first switch S1 of the first stage may be connected to the third terminal E3 of the monitoring unit 330 and a first electrode of the fourth switch S4, and a first electrode of the first switch S1 of the second stage to the last stage may be connected to a second electrode of the third switch S3 and a second electrode of the fourth switch S4 of the previous stage and a first electrode of the fourth switch S4 of the present stage. A second electrode of the first switch S1 may be connected to a first electrode of the second switch S2, a first electrode of the voltmeter V and the fifth terminal E5 of the monitoring unit 330.

A first electrode of the second switch S2 may be connected to the second electrode of the first switch S1, the first electrode of the voltmeter V and the fifth terminal E5 of the monitoring unit 330, and a second electrode of the second switch S2 may be connected to a first electrode of the resistor R.

A first electrode of the third switch S3 may be connected to a second electrode of the resistor R, a second electrode of the voltmeter V and a first electrode of the ammeter I. A second electrode of the third switch S3 of the first stage to the previous stage to the last stage may be connected to a second electrode of the fourth switch S4 of the present stage, the first electrode of the first switch S1 of the next stage and a first electrode of the fourth switch S4 of the next stage, and a second electrode of the third switch S3 of the last stage may be connected to the fourth terminal E4 of the monitoring unit 330 and a second electrode of the fourth switch S4 of the present stage.

A first electrode of the fourth switch S4 of the first stage may be connected to the third terminal E3 of the monitoring unit 330 and the first electrode of the first switch S1 of the present stage, and a first electrode of the fourth switch S4 of the second stage to the last stage may be connected to the second electrode of the third switch S3 of the previous stage and a second electrode of the fourth switch S4 of the previous stage. A second electrode of the fourth switch S4 of the first stage to the previous stage to the last stage may be connected to the second electrode of the third switch S3 of the present stage, the first electrode of the first switch S1 of the next stage and a first electrode of the fourth switch S4 of the next stage, and a second electrode of the fourth switch S4 of the last stage may be connected to the second electrode of the third switch S3 of the present stage and the fourth terminal E4 of the monitoring unit 330.

A first electrode of the resistor R may be connected to the second electrode of the second switch S2, and a second electrode of the resistor R may be connected to the first electrode of the third switch S3, a second electrode of the voltmeter V and a first electrode of the ammeter I.

A first electrode of the voltmeter V may be connected to the second electrode of the first switch S1, the first electrode of the second switch S2 and the fifth terminal E5 of the monitoring unit 330, and a second electrode of the voltmeter V may be connected to the first electrode of the third switch S3, the second electrode of the resistor R and the first electrode of the ammeter I.

A first electrode of the ammeter I may be connected to the first electrode of the third switch S3, the second electrode of the resistor R and the second electrode of the voltmeter V, and a second electrode of the ammeter I may be connected to the sixth terminal E6 of the monitoring unit 330.

The fifth switch S5 may be connected between the discharge unit 320 and the plurality of power detecting units 332, the sixth switch S6 may be connected between the plurality of power detecting units 332 and the power unit 370, and the seventh switch S7 may be connected between the discharge unit 320 and the power unit 370.

A first electrode of the fifth switch S5 may be connected to the second electrode of the third switch S3 of the last stage, the second electrode of the fourth switch S4 of the last stage and a first electrode of the sixth switch S6, and a second electrode of the fifth switch S5 may be connected to the fourth terminal E4 of the monitoring unit 330 and a first electrode of the seventh switch S7.

A first electrode of the sixth switch S6 may be connected to the second electrode of the third switch S3 of the last stage, the second electrode of the fourth switch S4 of the last stage and the first electrode of the fifth switch S5, and a second electrode of the sixth switch S6 may be connected to an eleventh terminal E11 of the monitoring unit 330.

A first electrode of the seventh switch S7 may be connected to the fourth terminal E4 of the monitoring unit 330 and the second electrode of the fifth switch S5, and a second electrode of the seventh switch S7 may be connected to a twelfth terminal E12 of the monitoring unit 330.

The state display unit 334 receives a discharge information from the discharge unit 320, receives the power information of the plurality of batteries 360 from the plurality of power detecting units 332 and receives a temperature information and a gas information of the plurality of batteries 360 from the plurality of temperature sensors 340 and the plurality of gas sensors 350. The state display unit 334 displays the discharge information as a state information of the discharge unit 320 and displays the power information, the temperature information and the gas information as a state information of each of the plurality of batteries 360.

For example, the state display unit 334 may include a flat panel display such as a liquid crystal display device and an organic light emitting diode display device.

Although one state display unit 334 displays the state information of the plurality of batteries 360 in an embodiment of FIG. 4, a plurality of state display units may display the state information of the plurality of batteries 360, respectively, in another embodiment.

The control unit 336 transmits and receives an information with the discharge unit 320 through a wired and wireless communication and controls the plurality of power detecting units 332 and the state display unit 334.

For example, the discharge unit 320 may transmit the discharge information such as a performance of the discharge operation and a completion of the discharge operation to the control unit 336 of the monitoring unit 330, and the control unit 336 of the monitoring unit 330 may transmit an order information such as a start of the discharge operation and a pause of the discharge operation to the discharge unit 320.

The control unit 336 controls the fifth to seventh switches S5 to S7.

For example, after discharge of the discharge unit 320 for the plurality of batteries 360 is completed, the control unit 336 may control the plurality of power detecting units 332 and the fifth to seventh switches S5 to S7 such that the power unit 370 is connected to the plurality of batteries 360 in series. As a result, the control unit 336 may perform an extreme over-discharge to the plurality of batteries 360.

Each of the plurality of temperature sensors 340 and the plurality of gas sensors 350 may be connected to the monitoring unit 330 and may be disposed adjacent to the plurality of batteries 360 to sense the temperature information and the gas information of the plurality of batteries 360 and to transmit the temperature information and the gas information of the plurality of batteries 360 to the state display unit 334.

For example, the plurality of temperature sensors 340 may be connected to the seventh terminal E7 of the monitoring unit 330, and the plurality of gas sensors 350 may be connected to the eighth terminal E8 of the monitoring unit 330.

An electrolyte in the plurality of batteries 360 is sensitive to a heat. As a result, when a relatively high current flows the plurality of batteries 360 or the plurality of batteries 360 are exposed to a relatively high temperature, a chemical reaction may occur according to a movement of an electron to generate a heat or a gas, and a swelling phenomenon where the plurality of batteries 360 swell up may occur to cause an ignition or an explosion.

Accordingly, the monitoring unit 330 may manage an abnormality of the plurality of batteries 360 using the temperature information and the gas information of the plurality of batteries 360.

The plurality of batteries 360 may be connected to the discharge unit 320 through the monitoring unit 330 in series.

For example, the ninth and tenth terminals E9 and E10 of each of the plurality of batteries 360 may be connected to the fifth and sixth terminals E5 and E6, respectively, of the monitoring unit 330.

The ninth terminal E9 of each of the plurality of batteries 360 may be connected to the second electrode of the first switch S1, the first electrode of the second switch S2 and the first electrode of the voltmeter V of each of the plurality of power detecting units 332 through the fifth terminal E5 of the monitoring unit 330, and the tenth terminal E10 of each of the plurality of batteries 360 may be connected to the second electrode of the ammeter I of each of the plurality of power detecting units 332 through the sixth terminal E6 of the monitoring unit 330.

The power unit 370 is connected to the monitoring unit 330 to supply a reverse potential voltage of a negative polarity for an extreme over-discharge to the plurality of batteries 360.

For example, thirteenth and fourteenth terminals E13 and E14 of the power unit 370 may be connected to the eleventh and twelfth terminals E11 and E12, respectively, of the monitoring unit 330.

The reverse potential voltage of the power unit 370 may have the same magnitude as and the opposite polarity to the discharge finish voltage. The reverse potential voltage of each of the plurality of batteries 360 may be about -1V.

Even when the battery is discharged to a total voltage of about 0V, the battery not having a state of charge of about 100% may be reused. When the battery whose life is completed is disassembled and materials thereof are recycled, an immersion in salt water may be performed for a permanent disutilization of the battery or a shortage state may be maintained for a predetermined time to prevent a rebound. A process time is elongated and an additional cost such as an environmental expense is generated in the discharge by the immersion in salt, and an additional cost due to a stock space and a management is generated in the maintenance of the shortage state.

In the battery discharge apparatus 310 according to a third embodiment of the present disclosure, after the plurality of batteries 360 are discharged to the discharge finish voltage by the discharge unit 320, the plurality of batteries 360 are discharged to the reverse potential voltage of the negative polarity by the power unit 370. As a result, the electrodes of the plurality of batteries 360 are broken, and the permanent disutilization is obtained without an additional process such as the discharge by the immersion in salt or the maintenance of the shortage state.

The monitoring unit 330 may operate in a discharge mode, a detecting mode and an additional discharge mode according to the control of the control unit 336.

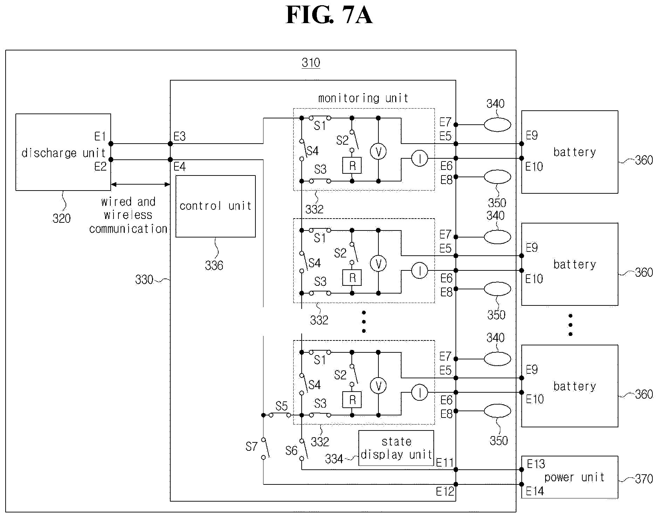

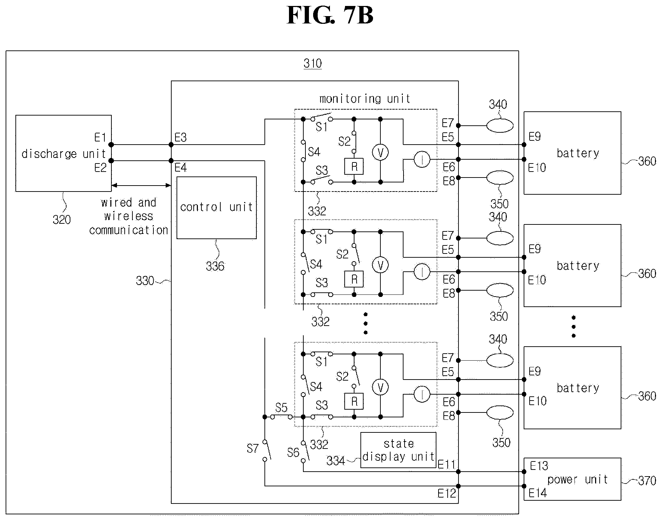

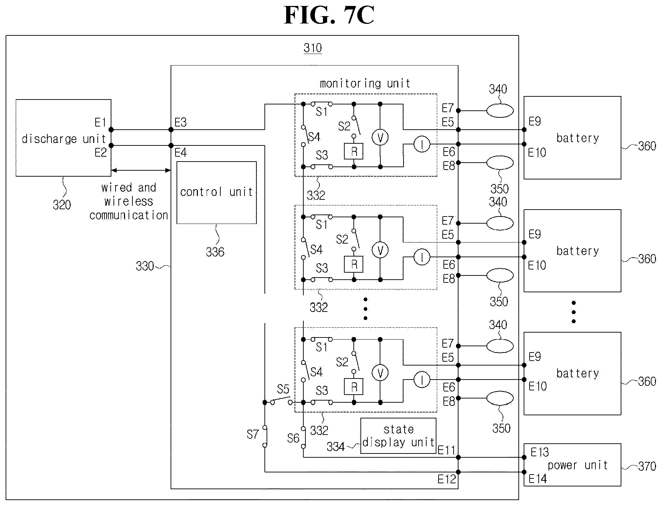

FIG. 7A, 7B and 7C are views showing operation states of a discharge mode, a detecting mode and an additional discharge mode, respectively, of a battery discharge apparatus according to a third embodiment of the present disclosure.

In a discharge mode of FIG. 7A, the first and third switches S1 and S3 of each of the plurality of power detecting units 332 and the fifth switch S5 are turned on and the second and fourth switches S2 and S4 of each of the plurality of power detecting units 332 and the sixth and seventh switches S6 and S7 are turned off according to a control of the control unit 336. The ninth terminals E9 of the battery 360 connected to the first stage is connected to the first terminal E1 of the discharge unit 320, and the ninth terminal E9 of each of the plurality of batteries 360 connected to the second stage to the last stage is connected to the tenth terminal E10 of the battery 360 connected to the previous stage. The tenth terminal E10 of each of the plurality of batteries 360 connected to the first stage to the previous stage to the last stage is connected to the ninth terminal E9 of the battery 360 connected to the next stage, and the tenth terminal E10 of the battery 360 connected to the last stage is connected to the second terminal E2 of the discharge unit 320.

As a result, the first terminal E1 of the discharge unit 320 is connected to the ninth terminal E9 of the battery 360 connected to the first stage, and the second terminal E2 of the discharge unit 320 is connected to the tenth terminal E10 of the battery 360 connected to the last stage. The plurality of batteries 360 are connected to each other in series. The remaining charges in each of the plurality of batteries 360 may be transferred to the discharge unit 320 through the monitoring unit 330, and each of the plurality of batteries 360 connected to the discharge unit 320 in series may be discharged.

In a detecting mode of FIG. 7B, the first and third switches S1 and S3 of at least one of the plurality of power detecting units 332 are turned off and the second and fourth switches S2 and S4 of the at least one of the plurality of power detecting units 332 are turned on according to a control of the control unit 336. A closed circuit is formed among the ninth and tenth terminals E9 and E10 of at least corresponding one of the plurality of batteries 360 and the resistor R of the at last one of the plurality of power detecting units 332.

As a result, the voltmeter V and the ammeter I of the at least one of the plurality of power detecting units 332 may detect the power information such as the voltage and the current of the at least corresponding one of the plurality of batteries 360.

The first and third switches S1 and S3 of the others of the plurality of power detecting units 332 and the fifth switch S5 are turned on and the second and fourth switches S2 and S4 of the others of the plurality of power detecting units 332 and the sixth and seventh switches S6 and S7 are turned off to discharge the others of the plurality of batteries 360 by connecting the others of the plurality of batteries 360 to the discharge unit 320 in series. Alternatively, the first and third switches S1 and S3 of the others of the plurality of power detecting units 332 and the sixth and seventh switches S6 and S7 are turned off and the second and fourth switches S2 and S4 of the others of the plurality of power detecting units 332 and the fifth switch S5 are turned on to detect the power information of the others of the plurality of batteries 360.

In an additional discharge mode of FIG. 7C, the first and third switches S1 and S3 of each of the plurality of power detecting units 332 and the sixth and seventh switch S6 and S7 are turned on and the second and fourth switches S2 and S4 of each of the plurality of power detecting units 332 and the fifth switch S5 are turned off according to a control of the control unit 336. The ninth terminals E9 of the battery 360 connected to the first stage is connected to the first terminal E1 of the discharge unit 320, and the ninth terminal E9 of each of the plurality of batteries 360 connected to the second stage to the last stage is connected to the tenth terminal E10 of the battery 360 connected to the previous stage. The tenth terminal E10 of each of the plurality of batteries 360 connected to the first stage to the previous stage to the last stage is connected to the ninth terminal E9 of the battery 360 connected to the next stage, and the tenth terminal E10 of the battery 360 connected to the last stage is connected to the thirteenth terminal E13 of the power unit 370. The fourteenth terminal E14 of the power unit 370 is connected to the second terminal E2 of the discharge unit 320.

As a result, the first terminal E1 of the discharge unit 320 is connected to the ninth terminal E9 of the battery 360 connected to the first stage, and the second terminal E2 of the discharge unit 320 is connected to the fourteenth terminal E14 of the power unit 370. The plurality of batteries 360 and the power unit 370 are connected to each other in series. The reverse potential voltage of the power unit 370 may be applied to the plurality of batteries 360, and an extreme over-discharge for a permanent disutilization may be performed to the plurality of batteries 360.

In the battery discharge apparatus 310 according to a third embodiment of the present disclosure, since the discharge unit 320 and the plurality of batteries 360 are connected to each other in series as 1:N relationship to perform the discharge operation, a time and a cost for the discharge operation of the plurality of batteries 360 are reduced.

In addition, since the power unit 370 performs the extreme over-discharge for the plurality of batteries 360 using the reverse potential voltage, the permanent disutilization for a reuse is obtained without an additional process.

In another embodiment, an extreme over-discharge for a permanent disutilization may be performed by connecting a power unit to each of a plurality of batteries.

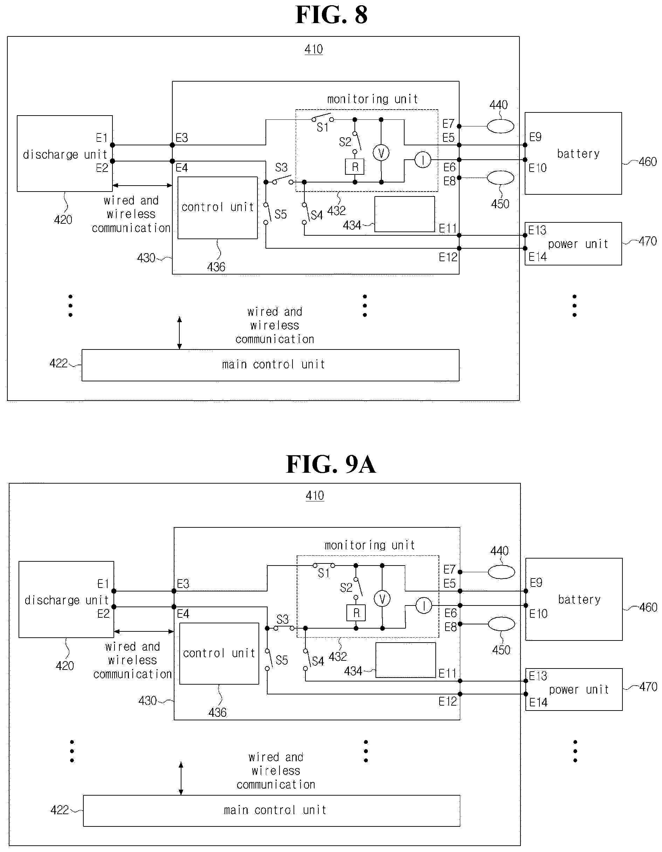

FIG. 8 is a view showing a battery discharge apparatus according to a fourth embodiment of the present disclosure. Illustration on a part the same as that of the first to third embodiments will be omitted.

In FIG. 8, a battery discharge apparatus 410 according to a fourth embodiment of the present disclosure includes a plurality of discharge units 420, a main control unit 422, a plurality of monitoring units 430, a plurality of temperature sensors 440, a plurality of gas sensors 450 and a plurality of power units (power sources) 470.

Since the plurality of discharge units 420, the plurality of monitoring units 430, the plurality of temperature sensors 440, the plurality of gas sensors 450, the plurality of batteries 460 and the plurality of power units 470 correspond to each other as 1:N relationship, one discharge unit 420, one monitoring unit 430, one temperature sensor 440, one gas sensor 450, one battery 460 and one power unit 470 are exemplarily illustrated.

The discharge unit 420 is connected to the battery 460 through the monitoring unit 430 to perform a discharge operation for the battery 460.

The discharge unit 420 may include a plurality of road resistors (not shown) and a plurality of switches (not shown) connected between first and second terminals E1 and E2 in series or in parallel. The plurality of road resistors of the discharge unit 420 may remove charges remaining in the battery 460 by converting the remaining charges into a heat.

For example, the discharge unit 420 may perform a discharge operation for the battery 460 from a discharge start voltage to a discharge finish voltage through a discharge cutoff voltage.

The discharge cutoff voltage corresponds to a state of charge of about 0% defined for preventing an over-discharge. The discharge cutoff voltage is lower than the discharge start voltage and higher the discharge finish voltage. The charge maximum voltage, the discharge start voltage, the discharge cutoff voltage and the discharge finish voltage may be about 8V, about 5V, about 2.5V and about 1V, respectively.

The main control unit 422 transmits and receives an information with the plurality of discharge units 420, the plurality of monitoring units 430 and the control unit 436 through a wired and wireless communication.

The monitoring unit 430 is connected between the discharge unit 420 and the battery 460 to transfer the remaining charges in the battery 460 to the discharge unit 420 or to monitor (observe and manage) a state of the discharge unit 420 and the battery 460.

For example, third and fourth terminals E3 and E4 of the monitoring unit 430 may be connected to the first and second terminals E1 and E2, respectively, of the discharge unit 420. Fifth and sixth terminals E5 and E6 of the monitoring unit 430 may be connected to ninth and tenth terminals E9 and E10, respectively, of the battery 460. Seventh and eighth terminals E7 and E8 of the monitoring unit 430 may be connected to the temperature sensor 440 and the gas sensor 450, respectively.

The first, third, fifth and ninth terminals E1, E3, E5 and E9 may correspond to an anode (+), and the second, fourth, sixth and tenth terminals E2, E4, E6 and E10 may correspond to a cathode (-).

The monitoring unit 430 may include a power detecting unit 432, third to fifth switches S3 to S5, a state display unit 434 and a control unit 436.

The power detecting unit 432 is connected to the discharge unit 420 to transfer the remaining charges in the battery 460 to the discharge unit 420 or detects a power information such as a voltage and a current of the battery 460 to transfer the power information of the battery 460 to the state display unit 434.

The power detecting unit 432 may include first and second switches S1 and S2, a resistor R, a voltmeter V and an ammeter I.

The first switch S1 may be connected between the discharge unit 420 and the battery 460, and the second switch S2 may be connected between the first switch S1 and the resistor R. The resistor R may be connected between the second switch S2 and the battery 460, the voltmeter V may be connected between the second switch S2 and the resistor R, and the ammeter I may be connected between the resistor R and the battery 460.

A first electrode of the first switch S1 may be connected to the third terminal E3 of the monitoring unit 430, and a second electrode of the first switch S1 may be connected to a first electrode of the second switch S2, a first electrode of the voltmeter V and the fifth terminal E5 of the monitoring unit 430.

A first electrode of the second switch S2 may be connected to the second electrode of the first switch S1, the first electrode of the voltmeter V and the fifth terminal E5 of the monitoring unit 430, and a second electrode of the second switch S2 may be connected to a first electrode of the resistor R.

A first electrode of the resistor R may be connected to the second electrode of the second switch S2, and a second electrode of the resistor R may be connected to a second electrode of the voltmeter V, a first electrode of the ammeter I, a first electrode of the third switch S3 and a first electrode of the fourth switch S4.

A first electrode of the voltmeter V may be connected to the second electrode of the first switch S1, the first electrode of the second switch S2 and the fifth terminal E5 of the monitoring unit 430, and a second electrode of the voltmeter V may be connected to the second electrode of the resistor R, the first electrode of the ammeter I, the first electrode of the third switch S3 and the first electrode of the fourth switch S4.

A first electrode of the ammeter I may be connected to the second electrode of the resistor R, the second electrode of the voltmeter V, the first electrode of the third switch S3 and the first electrode of the fourth switch S4, and a second electrode of the ammeter I may be connected to the sixth terminal E6 of the monitoring unit 430.

The third switch S3 may be connected between the discharge unit 420 and the power detecting unit 432, the fourth switch S4 may be connected between the power detecting unit 432 and the power unit 470, and the fifth switch S5 may be connected between the discharge unit 420 and the power unit 470.

A first electrode of the third switch S3 may be connected to the first electrode of the fourth switch S4, the second electrode of the resistor R, the second electrode of the voltmeter and the first electrode of the ammeter I, and a second electrode of the third switch S3 may be connected to the fourth terminal E4 of the monitoring unit 430 and a first electrode of the fifth switch S5.

A first electrode of the fourth switch S4 may be connected to the first electrode of the third switch S3, the second electrode of the resistor R, the second electrode of the voltmeter V and the first electrode of the ammeter I, and a second electrode of the fourth switch S4 may be connected to an eleventh terminal E11 of the monitoring unit 430.

A first electrode of the fifth switch S5 may be connected to the fourth terminal E4 of the monitoring unit 430 and the second electrode of the third switch S3, and a second electrode of the fifth switch S5 may be connected to a twelfth terminal E12 of the monitoring unit 430.

The state display unit 434 receives a discharge information from the discharge unit 420, receives the power information of the battery 460 from the power detecting unit 432 and receives a temperature information and a gas information of the battery 460 from the temperature sensor 440 and the gas sensor 450. The state display unit 434 displays the discharge information as a state information of the discharge unit 420 and displays the power information, the temperature information and the gas information as a state information of the battery 460.

For example, the state display unit 434 may include a flat panel display such as a liquid crystal display device and an organic light emitting diode display device.

Although one state display unit 434 displays the state information of one battery 460 in an embodiment of FIG. 8, one state display unit may display the state information of the plurality of batteries 460 in another embodiment.

The control unit 436 transmits and receives an information with the discharge unit 420 through a wired and wireless communication and controls the power detecting unit 432 and the state display unit 434.

For example, the discharge unit 420 may transmit the discharge information such as a performance of the discharge operation and a completion of the discharge operation to the control unit 436 of the monitoring unit 430, and the control unit 436 of the monitoring unit 430 may transmit an order information such as a start of the discharge operation and a pause of the discharge operation to the discharge unit 420.

The control unit 436 controls the third to fifth switches S3 to S5.

For example, after discharge of the discharge unit 420 for the battery 460 is completed, the control unit 436 may control the power detecting unit 432 and the third to fifth switches S3 to S5 such that the power unit 470 is connected to the battery 460 in series. As a result, the control unit 436 may perform an extreme over-discharge to the battery 460.

The temperature sensor 440 and the gas sensor 450 may be connected to the monitoring unit 430 and may be disposed adjacent to the battery 460 to sense the temperature information and the gas information of the battery 460 and to transmit the temperature information and the gas information of the battery 460 to the state display unit 434.

For example, the temperature sensor 440 may be connected to the seventh terminal E7 of the monitoring unit 430, and the gas sensor 450 may be connected to the eighth terminal E8 of the monitoring unit 430.

An electrolyte in the battery 460 is sensitive to a heat. As a result, when a relatively high current flows the battery 460 or the battery 460 are exposed to a relatively high temperature, a chemical reaction may occur according to a movement of an electron to generate a heat or a gas, and a swelling phenomenon where the battery 460 swell up may occur to cause an ignition or an explosion.

Accordingly, the monitoring unit 430 may manage an abnormality of the battery 460 using the temperature information and the gas information of the battery 460.

The battery 460 may be connected to the discharge unit 420 through the monitoring unit 430.

For example, the ninth and tenth terminals E9 and E10 of the battery 460 may be connected to the fifth and sixth terminals E5 and E6, respectively, of the monitoring unit 430.

The ninth terminal E9 of the battery 460 may be connected to the second electrode of the first switch S1, the first electrode of the second switch S2 and the first electrode of the voltmeter V of the power detecting unit 432 through the fifth terminal E5 of the monitoring unit 430, and the tenth terminal E10 of the battery 460 may be connected to the second electrode of the ammeter I of the power detecting unit 432 through the sixth terminal E6 of the monitoring unit 430.

The power unit 470 is connected to the monitoring unit 430 to supply a reverse potential voltage of a negative polarity for an extreme over-discharge to the battery 460.

For example, thirteenth and fourteenth terminals E13 and E14 of the power unit 470 may be connected to the eleventh and twelfth terminals E11 and E12, respectively, of the monitoring unit 430.

The reverse potential voltage of the power unit 470 may have the same magnitude as and the opposite polarity to the discharge finish voltage. The reverse potential voltage of the battery 460 may be about -1V.

Even when the battery is discharged to a total voltage of about 0V, the battery not having a state of charge of about 100% may be reused. When the battery whose life is completed is disassembled and materials thereof are recycled, an immersion in salt water may be performed for a permanent disutilization of the battery or a shortage state may be maintained for a predetermined time to prevent a rebound. A process time is elongated and an additional cost such as an environmental expense is generated in the discharge by the immersion in salt, and an additional cost due to a stock space and a management is generated in the maintenance of the shortage state.

In the battery discharge apparatus 410 according to a fourth embodiment of the present disclosure, after the battery 460 is discharged to the discharge finish voltage by the discharge unit 420, the battery 460 is discharged to the reverse potential voltage of the negative polarity by the power unit 470. As a result, the electrodes of the battery 460 are broken, and the permanent disutilization is obtained without an additional process such as the discharge by the immersion in salt or the maintenance of the shortage state.

The monitoring unit 430 may operate in a discharge mode, a detecting mode and an additional discharge mode according to the control of the control unit 436.

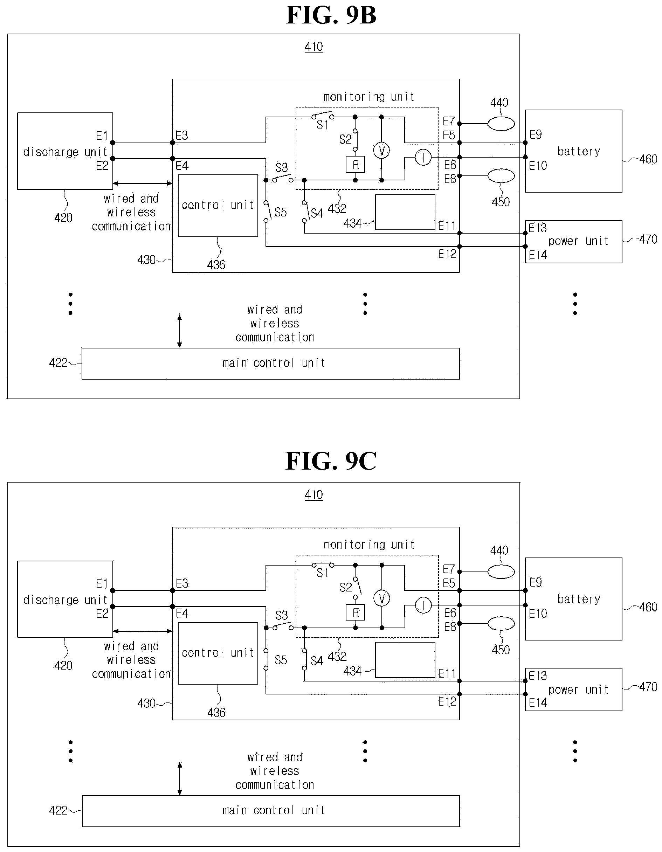

FIG. 9A, 9B and 9C are views showing operation states of a discharge mode, a detecting mode and an additional discharge mode, respectively, of a battery discharge apparatus according to a fourth embodiment of the present disclosure.

In a discharge mode of FIG. 9A, the first and third switches S1 and S3 of the power detecting unit 432 and the third switch S3 are turned on and the second switch S2 of the power detecting unit 432 and the fourth and fifth switches S4 and S5 are turned off according to a control of the control unit 436. The ninth terminals E9 of the battery 460 is connected to the first terminal E1 of the discharge unit 420, and the tenth terminal E10 of the battery 460 is connected to the first terminal E1 of the discharge unit 420.

As a result, the first terminal E1 of the discharge unit 420 is connected to the ninth terminal E9 of the battery 460, and the second terminal E2 of the discharge unit 420 is connected to the tenth terminal E10 of the battery 460. The remaining charges in the battery 460 may be transferred to the discharge unit 420 through the monitoring unit 430, and the battery 460 connected to the discharge unit 420 may be discharged.

In a detecting mode of FIG. 9B, the first switch S1 of the power detecting unit 432 and the third to fifth switches S3 to S5 are turned off and the second switch S2 of the power detecting unit 432 is turned on according to a control of the control unit 436. A closed circuit is formed among the ninth and tenth terminals E9 and E10 of the battery 460 and the resistor R of the power detecting unit 432.

As a result, the voltmeter V and the ammeter I of the power detecting unit 432 may detect the power information such as the voltage and the current of the battery 460.

In an additional discharge mode of FIG. 9C, the first switch S1 of the power detecting unit 432 and the fourth and fifth switch S4 and S5 are turned on and the second switch S2 of the power detecting unit 432 and the third switch S3 are turned off according to a control of the control unit 436. The ninth terminals E9 of the battery 460 is connected to the first terminal E1 of the discharge unit 420, and the tenth terminal E10 of the battery 460 is connected to the thirteenth terminal E13 of the power unit 470. The fourteenth terminal E14 of the power unit 470 is connected to the second terminal E2 of the discharge unit 420.

As a result, the first terminal E1 of the discharge unit 420 is connected to the ninth terminal E9 of the battery 460, and the second terminal E2 of the discharge unit 420 is connected to the fourteenth terminal E14 of the power unit 470. The battery 460 and the power unit 470 are connected to each other in series. The reverse potential voltage of the power unit 470 may be applied to the battery 460, and an extreme over-discharge for a permanent disutilization may be performed to the battery 460.

In the battery discharge apparatus 410 according to a fourth embodiment of the present disclosure, since the plurality of discharge units 420 and the plurality of batteries 460 are connected to each other in series as 1: 1 relationship to perform the discharge operation, a time and a cost for the discharge operation of the plurality of batteries 460 are reduced.

In addition, since the power unit 470 performs the extreme over-discharge for the plurality of batteries 460 using the reverse potential voltage, the permanent disutilization for a reuse is obtained without an additional process.

It will be apparent to those skilled in the art that various modifications and variation can be made in the present invention without departing from the spirit or scope of the invention. Thus, it is intended that the present invention cover the modifications and variations of this invention provided they come within the scope of the appended claims and their equivalents.

## Claims

1. A battery discharge apparatus comprising:
a discharge unit;
a monitoring unit including a plurality of power detecting units connected to the discharge unit in parallel and connected to a plurality of batteries, respectively;
a plurality of temperature sensors connected to the monitoring unit and sensing a temperature of the plurality of batteries; and
a plurality of gas sensors connected to the monitoring unit and sensing a gas of the plurality of batteries.

2. The battery discharge apparatus of claim 1, wherein first and second terminals of the discharge unit are connected to third and fourth terminals, respectively, of the monitoring unit.

3. The battery discharge apparatus of claim 1, wherein each of the plurality of power detecting units comprises:
a first switch;
a second switch connected to the first switch;
a resistor connected to the second switch;
a voltmeter connected to the second switch and the resistor; and
an ammeter connected to the resistor.

4. The battery discharge apparatus of claim 3, wherein, in a discharge mode,
the first switch of each of the plurality of power detecting units is turned on and the second switch is turned off, and
a charge of the plurality of batteries is transferred to the discharge unit.

5. The battery discharge apparatus of claim 3, wherein, in a detecting mode,
the first switch of at least one of the plurality of power detecting units is turned off and the second switch is turned on, and
the voltmeter and the ammeter detect a voltage and a current, respectively, of at least one of the plurality of batteries corresponding to the at least one of the plurality of power detecting units.

6. The battery discharge apparatus of claim 3, wherein a first electrode of the first switch is connected to a third terminal of the monitoring unit, and a second electrode of the first switch is connected to a first electrode of the second switch, a first electrode of the voltmeter and a fifth terminal of the monitoring unit,
wherein the first electrode of the second switch is connected to the second electrode of the first switch, the first electrode of the voltmeter and the fifth terminal of the monitoring unit, and a second electrode of the second switch is connected to a first electrode of the resistor,
wherein the first electrode of the resistor is connected to the second electrode of the second switch S2, and a second electrode of the resistor is connected to a fourth terminal of the monitoring unit, a second electrode of the voltmeter and a first electrode of the ammeter,
wherein the first electrode of the voltmeter is connected to the second electrode of the first switch, the first electrode of the second switch and the fifth terminal of the monitoring unit, and the second electrode of the voltmeter is connected to the fourth terminal of the monitoring unit, and
wherein the first electrode of the ammeter is connected to the fourth terminal of the monitoring unit, the second electrode of the resistor and the second electrode of the voltmeter, and a second electrode of the ammeter is connected to a sixth terminal of the monitoring unit.

7. The battery discharge apparatus of claim 1, wherein fifth and sixth terminals of the monitoring unit are connected to ninth and tenth terminals, respectively, of each of the plurality of batteries.

8. The battery discharge apparatus of claim 1, wherein a seventh terminal of the monitoring unit is connected to the plurality of temperature sensors, and an eighth terminal of the monitoring unit is connected to the plurality of gas sensors.

9. The battery discharge apparatus of claim 1, further comprising:
a state display unit displaying a discharge information of the discharge unit, a power information of the plurality of power detecting units, a temperature information of the plurality of temperature sensors and a gas information of the plurality of gas sensors as a state information; and
a control unit communicating with the discharge unit wiredly and wirelessly and controlling the plurality of power detecting units and the state display unit.

10. A battery discharge apparatus comprising:
a discharge unit;
a monitoring unit including a plurality of power detecting units connected to the discharge unit in series and connected to a plurality of batteries, respectively;
a plurality of temperature sensors connected to the monitoring unit and sensing a temperature of the plurality of batteries; and
a plurality of gas sensors connected to the monitoring unit and sensing a gas of the plurality of batteries.

11. The battery discharge apparatus of claim 10, wherein first and second terminals of the discharge unit are connected to third and fourth terminals, respectively, of the monitoring unit.

12. The battery discharge apparatus of claim 10, wherein each of the plurality of power detecting units comprises:
a first switch;
a second switch connected to the first switch;
a resistor connected to the second switch;
a voltmeter connected to the second switch and the resistor;
an ammeter connected to the resistor;
a third switch connected to the resistor; and
a fourth switch connected to the first and third switches.

13. The battery discharge apparatus of claim 12, wherein, in a discharge mode,
the first and third switches of each of the plurality of power detecting units are turned on and the second and fourth switches are turned off, and
a charge of the plurality of batteries is transferred to the discharge unit.

14. The battery discharge apparatus of claim 12, wherein, in a detecting mode,
the first and third switches of at least one of the plurality of power detecting units are turned off and the second and fourth switches are turned on, and
the voltmeter and the ammeter detect a voltage and a current, respectively, of at least one of the plurality of batteries corresponding to the at least one of the plurality of power detecting units.

15. The battery discharge apparatus of claim 12, wherein the plurality of power detecting units include first to nth stages connected to the discharge unit in series,
wherein a first electrode of the first switch of the first stage is connected to a third terminal of the monitoring unit and a first electrode of the fourth switch of the first stage, a first electrode of each of the first switch of the second to nth stages is connected to a second electrode of the third switch of a previous stage, a second electrode of the fourth switch and a first electrode of the fourth switch of a present stage, and a second electrode of the first switch of each of the first to nth stages is connected to a first electrode of the second switch of a present stage, a first electrode of the voltmeter of a present stage and a fifth terminal of the monitoring unit,
wherein the first electrode of the second switch of each of the first to nth stages is connected to the second electrode of the first switch of a present stage, the first electrode of the voltmeter of a present stage and the fifth terminal of the monitoring unit, and a second electrode of the second switch of each of the first to nth stages is connected to a first electrode of the resistor,
wherein a first electrode of the third switch of each of the first to nth stages is connected to a second electrode of the resistor of a present stage, a second electrode of the voltmeter of a present stage and a first electrode of the ammeter of a present stage, a second electrode of the third switch of each of the first to (n-1)th stages is connected to a second electrode of the fourth switch of a present stage, the first electrode of the first switch of a next stage and a first electrode of the fourth switch of a next stage, and a second electrode of the third switch of the nth stage is connected to a fourth terminal of the monitoring unit and a second electrode of the fourth switch of a present stage,
wherein a first electrode of the fourth switch of the first stage is connected to a third terminal of the monitoring unit and the first electrode of the first switch of the first stage, a first electrode of the fourth switch of each of the second to nth stages is connected to the second electrode of the third switch of a previous stage and a second electrode of the fourth switch of a previous stage, a second electrode of the fourth switch of each of the first to (n-1)th stages is connected to the second electrode of the third switch of a present stage, the first electrode of the first switch of a next stage and a first electrode of the fourth switch of a next stage, and a second electrode of the fourth switch of the nth stage is connected to the second electrode of the third switch of a present stage and the fourth terminal of the monitoring unit,
wherein the first electrode of the resistor of each of the first to nth stages is connected to the second electrode of the second switch S2 of a present stage, and a second electrode of the resistor of each of the first to nth stages is connected to the first electrode of the third switch of a present stage, a second electrode of the voltmeter and the first electrode of the ammeter,
wherein the first electrode of the voltmeter of each of the first to nth stages is connected to the second electrode of the first switch of a present stage, the first electrode of the second switch of a present stage and the fifth terminal of the monitoring unit, and the second electrode of the voltmeter of each of the first to nth stages is connected to the first electrode of the third switch of a present stage, the second electrode of the resistor of a present stage and the first electrode of the ammeter of a present stage, and
wherein the first electrode of the ammeter of each of the first to nth stages is connected to the first electrode of the third switch of a present stage, the second electrode of the resistor of a present stage and the second electrode of the voltmeter of a present stage, and a second electrode of the ammeter of each of the first to nth stages is connected to a sixth terminal of the monitoring unit.

16. The battery discharge apparatus of claim 10, wherein fifth and sixth terminals of the monitoring unit are connected to ninth and tenth terminals, respectively, of each of the plurality of batteries.

17. The battery discharge apparatus of claim 10, wherein a seventh terminal of the monitoring unit is connected to the plurality of temperature sensors, and an eighth terminal of the monitoring unit is connected to the plurality of gas sensors.

18. The battery discharge apparatus of claim 10, further comprising:
a state display unit displaying a discharge information of the discharge unit, a power information of the plurality of power detecting units, a temperature information of the plurality of temperature sensors and a gas information of the plurality of gas sensors as a state information; and
a control unit communicating with the discharge unit wiredly and wirelessly and controlling the plurality of power detecting units and the state display unit.

19. The battery discharge apparatus of claim 12, further comprising a power unit connected to the monitoring unit,
wherein the monitoring unit further includes:
a fifth switch connected between the discharge unit and the plurality of power detecting units;
a sixth switch connected between the plurality of power detecting units and the power unit; and
a seventh switch connected between the discharge unit and the power unit.

20. The battery discharge apparatus of claim 19, wherein, in an additional discharge mode,
the first and third switches of each of the plurality of power detecting units, the sixth switch and the seventh switch are turned on and the second and fourth switches of each of the plurality of power detecting units and the fifth switch are turned off, and
a reverse potential voltage of the power unit is applied to the plurality of batteries.

21. The battery discharge apparatus of claim 19, wherein the plurality of power detecting units include first to nth stages connected to the discharge unit in series,
wherein a first electrode of the fifth switch is connected to a second electrode of the third switch of the nth stage, a second electrode of the fourth switch of the nth stage and a first electrode of the sixth switch, and a second electrode of the fifth switch is connected to a fourth terminal of the monitoring unit and a first electrode of the seventh switch,
wherein a first electrode of the sixth switch is connected to the second electrode of the third switch of the nth stage, the second electrode of the fourth switch of the nth stage and the first electrode of the fifth switch, and a second electrode of the sixth switch is connected an eleventh terminal of the monitoring unit, and
wherein a first electrode of the seventh switch is connected to the fourth terminal of the monitoring unit and the second electrode of the fifth switch, and a second electrode of the seventh switch is connected to a twelfth terminal of the monitoring unit.

22. A battery discharge apparatus comprising:
a plurality of discharge units;
a plurality of monitoring units including a power detecting unit connected to each of the plurality of discharge units and connected to a plurality of batteries, respectively;
a plurality of temperature sensors connected to the plurality of monitoring units, respectively, and sensing a temperature of the plurality of batteries;
a plurality of gas sensors connected to the plurality of monitoring units, respectively, and sensing a gas of the plurality of batteries;
a main control unit transmitting and receiving an information with the plurality of discharge units and the plurality of monitoring units; and
a plurality of power units connected to the plurality of monitoring units, respectively, and supplying a reverse potential voltage to the plurality of batteries, respectively.

23. The battery discharge apparatus of claim 22, wherein the power detecting unit comprises:
a first switch;
a second switch connected to the first switch;
a resistor connected to the second switch;
a voltmeter connected to the second switch and the resistor; and
an ammeter connected to the resistor.

24. The battery discharge apparatus of claim 23, wherein each of the plurality of monitoring units further includes:
a third switch connected between each of the plurality of discharge units and the power detecting unit;
a fourth switch connected between the power detecting unit and each of the plurality of power units; and
a seventh switch connected between each of the plurality of discharge units and each of the plurality of power units.
